(19) Europäisches Patentamt
European Patent Office
Office européen des brevets

(11) **EP 3 006 847 B1**

(12) **EUROPEAN PATENT SPECIFICATION**

(45) Date of publication and mention
of the grant of the patent:
**31.03.2021  Bulletin 2021/13**

(51) Int Cl.:
*F24F 11/30* *(2018.01)*        *F24F 11/62* *(2018.01)*
*F24F 110/00* *(2018.01)*      *F25B 13/00* *(2006.01)*
*F25B 49/02* *(2006.01)*

(21) Application number: **13885584.6**

(22) Date of filing: **27.05.2013**

(86) International application number:
**PCT/JP2013/064595**

(87) International publication number:
**WO 2014/192052 (04.12.2014 Gazette 2014/49)**

(54) **AIR-CONDITIONING DEVICE**

KLIMAANLAGENVORRICHTUNG

DISPOSITIF DE CLIMATISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.04.2016  Bulletin 2016/15**

(73) Proprietor: **Mitsubishi Electric Corporation
Tokyo 100-8310 (JP)**

(72) Inventors:
• **MATSUI, Ryosuke
Tokyo 100-8310 (JP)**
• **TANAKA, Kosuke
Tokyo 100-8310 (JP)**

• **MAKINO, Hiroaki
Tokyo 100-8310 (JP)**
• **SAKABE, Akinori
Tokyo 100-8310 (JP)**

(74) Representative: **Pfenning, Meinig & Partner mbB
Patent- und Rechtsanwälte
Theresienhöhe 11a
80339 München (DE)**

(56) References cited:
EP-A1- 2 175 213      EP-A1- 2 261 580
EP-A2- 1 585 924      WO-A1-2008/087916
DE-A1- 3 739 980      JP-A- H1 030 852
JP-A- H1 030 852      JP-A- 2011 007 489

**Description**

Technical Field

The present invention relates to an air-conditioning apparatus.

Background Art

Hitherto, a method has been proposed in which control gains of PID control are determined in accordance with an opening degree of an expansion valve, compressor operating capacity, and a deviation between a current value and a target value of a controlled object (for example, a compressor discharge temperature), and then the opening degree of the expansion valve is driven through the PID control to control a refrigerant flow rate (for example, see Patent Literature 1).

In a control method in which an opening degree of an expansion valve is changed in accordance with a deviation between a current value and a target value of a controlled object, the following method has also been proposed. In the proposed method, if a target value of the controlled object is increased, the target value of the controlled object is temporarily set to a temporary target value larger than a new target value, and then, when a deviation between a current value and the new target value of the controlled object becomes less than or equal to a predetermined value, the temporary target value is changed to the new target value of the controlled object, thereby enhancing quick response of the current value to the target value of the controlled object (for example, see Patent Literature 2).

EP 2 261 580 A1 discloses an air conditioner comprised of a refrigeration apparatus including a main controller and a sub-controller. Therein, a compressor control section of the main controller adjusts the operational capacity of the compressor, and stops the compressor when capability of the air conditioner is excessive relative to a load. When a frequency at which the compressor is started and stopped by the compressor control section is increased, a target superheat degree changing section of the main controller forcibly increases a target degree of superheat. Then, in air cooling operation, the sub-controller adjusts the degree of opening of an indoor expansion valve based on the increased target degree of superheat. In air heating operation, the main controller adjusts the degree of opening of an outdoor expansion valve based on the increased target degree of superheat.

DE 37 39 980 A1, WO 2008/087916 A1, EP 2 175 213 A1, EP 1 585 924 A2, and JP H10 30852 A each disclose an air-conditioning apparatus according to the preamble of claim 1.

Citation List

Patent Literature

Patent Literature 1: Japanese Unexamined Patent Application Publication No. 2001-012808 (page 7, Fig. 2)
Patent Literature 2: Japanese Unexamined Patent Application Publication No. 2009-008346 (abstract, Fig. 3)

Summary of Invention

Technical Problem

However, an existing air-conditioning apparatus has the following problems. First, in control disclosed in Patent Literature 1, the control gains of the PID control are system-specific values of the air-conditioning apparatus. That is, the control gains are constant values (fixed values) even if environment conditions of the inside and outside of a room, or an operating state, such as a refrigerant circulation volume, are or is changed, and thus effects of a change in operating state, such as a high pressure or low pressure, of a refrigeration cycle have not been taken into consideration. Hence, it is difficult to perform control in an optimum state at all times in accordance with environment conditions or an operating state. This has a problem in that, in some operating state of the air-conditioning apparatus, it takes long time for the controlled object to reach the target value due to a small amount of change in the opening degree, which is a manipulated variable of the expansion valve, and it takes time to achieve a comfortable space.

Additionally, in control disclosed in Patent Literature 2, when a deviation between a current value of a degree of subcooling, which is the controlled object, and a target value of the degree of subcooling becomes less than or equal to a predetermined value, a manipulated variable of the expansion valve has to be reduced to prevent an overshoot. This has a problem in that it takes time for the current value of the controlled object to reach the target value of the controlled object due to a reduction in the manipulated variable.

It is noted that, in an air-conditioning apparatus, an operational object to be operated so that a state variable of a refrigeration cycle, such as a temperature or pressure of refrigerant serving as a controlled object, reaches a target value is not limited to an expansion valve, and a compressor, a condenser fan, and an evaporator fan also serve as operational objects, and have similar problems in terms of control of a manipulated variable.

The present invention has been accomplished in view of the above-described problems, and an object thereof is to provide an air-conditioning apparatus that suppresses an overshoot in consideration of an operating state of the air-conditioning apparatus and also controls a manipulated variable of an operational object so that a current value of a controlled object reaches a target value of the controlled object swiftly.

Solution to Problem

An air-conditioning apparatus, as set out in independent claim 1, is provided according to the present invention. The air-conditioning apparatus includes: a refrigerant circuit which includes a compressor, a condenser, an expansion valve, and an evaporator, and through which refrigerant circulates; a condenser fan; an evaporator fan; a measurement unit configured to measure an operating state variable of the refrigerant circuit; and a control unit configured to control a manipulated variable of an operational object, which is at least one of a frequency of the compressor, an opening degree of the expansion valve, a rotation speed of the condenser fan, or a rotation speed of the evaporator fan, so that a current value of a controlled object, which is one measurement of measurements obtained by the measurement unit, reaches a target value of the controlled object determined based on measurements other than the one measurement. The control unit controls the manipulated variable of the operational object by changing a control gain.

Advantageous Effects of Invention

The present invention can suppress an overshoot in consideration of an operating state of the air-conditioning apparatus and also control the manipulated variable of the operational object so that the current value of the controlled object reaches the target value of the controlled object swiftly.

Brief Description of Drawings

[Fig. 1] Fig. 1 is a refrigerant circuit diagram of an air-conditioning apparatus in Embodiment 1 according to the present invention.
[Fig. 2] Fig. 2 illustrates a flow of operations performed when a user operates a remote control in the air-conditioning apparatus according to Embodiment 1 of the present invention.
[Fig. 3] Fig. 3 illustrates a control principle of an operational object.
[Fig. 4] Fig. 4 illustrates the relationship between a control gain K and an allowable overshoot ratio.
[Fig. 5] Fig. 5 illustrates a difference in settling time between the case where a setting allowable overshoot ratio Y is a variable allowable overshoot ratio Xa and the case where the setting allowable overshoot ratio Y is a value smaller than the variable allowable overshoot ratio Xa.
[Fig. 6] Fig. 6 illustrates changes in an allowable value (target value) Ta in each control interval for the case where the variable allowable overshoot ratio Xa is set as the setting allowable overshoot ratio Y when a current value is lower than a lower limit value of a settling range.
[Fig. 7] Fig. 7 illustrates changes in the allowable value (target value) Ta in each control interval for the case where a reference allowable overshoot ratio Xb is set as the setting allowable overshoot ratio Y when the current value is lower than the lower limit value of the settling range.
[Fig. 8] Fig. 8 is a flowchart illustrating details about operation of an expansion valve 7 in S4 illustrated in Fig. 2.
[Fig. 9] Fig. 9 is a control flowchart for a manipulated variable of an operational object in an air-conditioning apparatus according to Embodiment 2 of the present invention.
[Fig. 10] Fig. 10 illustrates changes in current value over time for the case where the settling range $\Delta T$ is changed in midstream in the air-conditioning apparatus according to Embodiment 2 of the present invention.
[Fig. 11] Fig. 11 illustrates a subsequent value prediction method of predicting a subsequent value from a current value, a previous value, and a second previous value of a controlled object.
[Fig. 12] Fig. 12 illustrates a specific heat ratio of refrigerant used for a refrigeration cycle of the air-conditioning apparatus in each Embodiment of the present invention.

Description of Embodiments

The structure of an air-conditioning apparatus as an example of a refrigeration cycle apparatus of the present invention will be described below.

Embodiment 1

Embodiments of the present invention will be described in detail below with reference to the drawings.

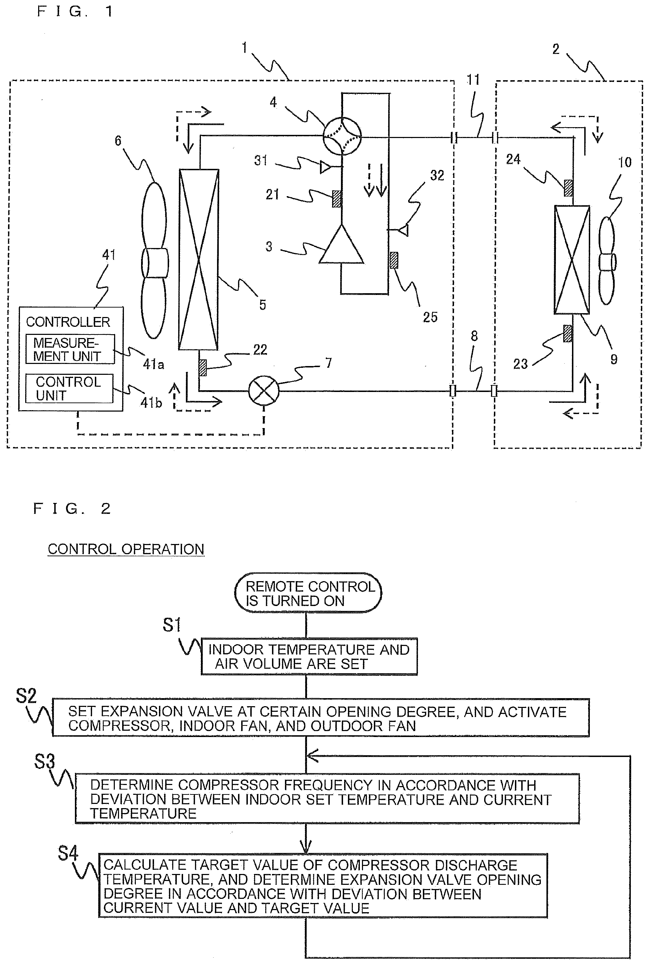

Fig. 1 is a refrigerant circuit diagram of an air-conditioning apparatus in Embodiment 1 according to the present invention.

The air-conditioning apparatus includes an outdoor unit 1 and an indoor unit 2. In the outdoor unit 1, there are installed a compressor 3, a four-way valve 4 that switches between a cooling operation and a heating operation, an outdoor heat exchanger 5, an outdoor fan (evaporator fan or condenser fan) 6, and an expansion valve 7. In the indoor unit 2, there are installed an indoor heat exchanger 9 and an indoor fan (condenser fan or evaporator fan) 10. Refrigerant is used as a heat transfer medium in a refrigerant circuit of the present air-conditioning apparatus. It is noted that, although operation can be switched between cooling and heating by switching the four-way valve 4 in Fig. 1, the four-way valve 4 is not indispensable, and can be omitted.

The compressor 3 is of a type in which a rotation speed is controlled by an inverter and thus capacity is controlled. Although, among compressors, there is a compressor of a type in which a rotation speed is fixed, effects similar to those of a type in which capacity control of a rotation speed is performed are produced in the present invention.

An opening degree of the expansion valve 7 can be variably controlled. The outdoor heat exchanger 5 exchanges heat between outdoor air sent with the outdoor fan 6 and the refrigerant. The indoor heat exchanger 9 exchanges heat between indoor air sent with the indoor fan 10 and the refrigerant. A liquid pipe 8 and a gas pipe 11 are connection pipes that connect the outdoor unit 1 and the indoor unit 2.

In the outdoor unit 1, there are installed a plurality of temperature sensors and a controller 41. A temperature sensor 21, a temperature sensor 22, and a temperature sensor 25 measure respective pipe temperatures at their respective installation locations on a discharge side of the compressor 3, between the outdoor heat exchanger 5 and the expansion valve 7, and on a suction side of the compressor 3, and estimate respective refrigerant temperatures.

In the indoor unit 2, there are installed temperature sensors 23 and 24, and the temperature sensor 23 and the temperature sensor 24 measure respective pipe temperatures at their respective installation locations on a liquid pipe 8 side of the indoor heat exchanger 9 and on a gas pipe 11 side of the indoor heat exchanger 9, and estimate respective refrigerant temperatures.

In the outdoor unit 1, there are also installed pressure sensors 31 and 32, and the pressure sensor 31 and the pressure sensor 32 respectively measure a pressure of refrigerant discharged from the compressor 3 and a pressure of refrigerant to be sucked into the compressor 3. The controller 41 installed in the outdoor unit 1 also includes a measurement unit 41a that measures operating information specified by each sensor or a user of the air-conditioning apparatus, and a control unit 41b that calculates a frequency of the compressor 3, a rotation speed of the outdoor fan 6, an opening degree of the expansion valve 7, and so forth on the basis of the measured information to thereby control the frequency of the compressor 3, flow switching of the four-way valve 4, the rotation speed of the outdoor fan 6, the opening degree of the expansion valve 7, and so forth. It is noted that Fig. 1 illustrates the case where an operational object is the expansion valve 7, and a dotted line is also connected to the compressor 3, the outdoor fan 6, and the indoor fan 10.

Next, an operating action of this air-conditioning apparatus will be described with reference to Fig. 1.

When the cooling operation is performed, a flow passage of the four-way valve 4 is set to extend in a direction represented by a solid line in Fig. 1. Then, high-temperature, high-pressure gas refrigerant discharged from the compressor 3 passes through the four-way valve 4, and is condensed and liquefied while transferring heat in the outdoor heat exchanger 5 serving as a condenser to become high-pressure liquid refrigerant. The high-pressure refrigerant having flowed from the outdoor heat exchanger 5 is decompressed by the expansion valve 7, then flows into the indoor unit 2 through the liquid pipe 8, flows into the indoor heat exchanger 9 serving as an evaporator, receives heat there, and is evaporated and gasified. Cooling is performed by receiving heat of a load-side medium, such as air or water, on the indoor unit 2 side. After that, the refrigerant flows into the outdoor unit 1 through the gas pipe 11. Then, the refrigerant passes through the four-way valve 4, and is sucked into the compressor 3.

When the heating operation is performed, the flow passage of the four-way valve 4 is set to extend in a direction represented by dashed lines in Fig. 1. Then, high-temperature, high-pressure gas refrigerant discharged from the compressor 3 flows out of the outdoor unit 1 through the four-way valve 4, and flows into the indoor unit 2 through the gas pipe 11. The refrigerant having flowed into the indoor unit 2 is condensed and liquefied while transferring heat in the indoor heat exchanger 9 serving as a condenser to become high-pressure liquid refrigerant. Heating is performed by transferring heat to a load-side medium, such as air or water, on the indoor unit 2 side. The high-pressure refrigerant having flowed from the indoor heat exchanger 9 flows into the outdoor unit 1 through the liquid pipe 8. The refrigerant having flowed into the outdoor unit 1 is decompressed by the expansion valve 7, then flows into the outdoor heat exchanger 5 serving as an evaporator, receives heat there, and is evaporated and gasified. Then, the refrigerant passes through the four-way valve 4, and is sucked into the compressor 3.

Fig. 2 illustrates a flow of operations performed when the user operates a remote control in the air-conditioning apparatus according to Embodiment 1 of the present invention. It is noted that Fig. 2 illustrates a flow of operations performed in the case where a controlled object is a compressor discharge temperature and an operational object is the expansion valve 7.

In S1, the controller 41 receives signals of an indoor temperature and indoor air volume set by the user through the remote control. In S2, the controller 41 sets the expansion valve 7 at a predetermined initial opening degree, and activates the compressor 3, the indoor fan 10, and the outdoor fan 6. In S3, the controller 41 determines compressor frequency in accordance with a deviation between the indoor set temperature and an indoor current temperature. The compressor frequency determined here is used when a control gain K to be described is calculated.

In S4, the controller 41 determines a target value of a compressor discharge temperature on the basis of a compressor discharge refrigerant pressure measured by the pressure sensor 31, a compressor suction refrigerant pressure measured by the pressure sensor 32, and a preset relational expression or table. Then, as described later, the controller 41 determines an expansion valve opening degree in accordance with a deviation between the compressor discharge temperature (current value) detected by the temperature sensor 21 and the target value. Hereinafter, operations of S3 to S4 are repeated at control intervals. If the controller 41 receives a signal of stopping of operation from the user through the remote control, the flow of operations illustrated in Fig. 2 is ended.

Next, a concept of control of an operational object (expansion valve 7 here) in the present invention performed in order that a controlled object (compressor discharge temperature here) can reach a target value in a short time period will be described.

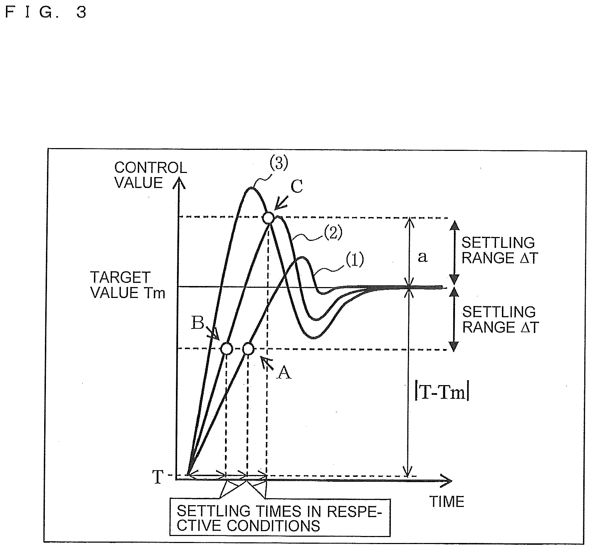

Fig. 3 illustrates a control principle of an operational object. Fig. 3 illustrates a plurality of patterns (1) to (3) of response characteristics of a control value (compressor discharge temperature here) seen when a manipulated variable of the operational object is changed.

A maximum value of the amount by which the control value exceeds a target value Tm is generally referred to as an overshoot. A time period taken for the control value to settle within a settling range ($\pm \Delta T$ of the target value Tm here) in which the target value is centered, which is an intended allowable range, is referred to as a settling time. An expression of $a/|T - Tm|$ is defined as an allowable overshoot ratio, where $|T - Tm|$ is a deviation between the target value and a current value T, and a is an overshoot amount (Fig. 3 illustrates only an overshoot amount of a line (3)).

In Fig. 3, a line (1) passing through a point A has the smallest allowable overshoot ratio, and the control value converges to the target value without reaching an upper limit value of the settling range. A line (2) passing through a point B has a larger allowable overshoot ratio than that of the line (1), the control value converges to the target value after reaching exactly the upper limit value of the settling range. The line (3) passing through a point C has an excessively large allowable overshoot ratio, and thus the control value converges to the target value after exceeding the upper limit value of the settling range. Since the settling time denotes a last point in time at which the control value settles within the settling range of the target value, the point A, the point B, and the point C denote positions of respective settling times in respective conditions, and thus it is found that the line (2) has the shortest settling time. Hence, in Embodiment 1, as in the line (2), an allowable overshoot ratio is set at which the control value reaches exactly the upper limit value of the settling range, a control gain K is calculated on the basis of that allowable overshoot ratio, and then a manipulated variable of the operational object is determined on the basis of that control gain K.

Next, the relationship between an allowable overshoot ratio and a control gain K for determining a manipulated variable of the operational object will be described.

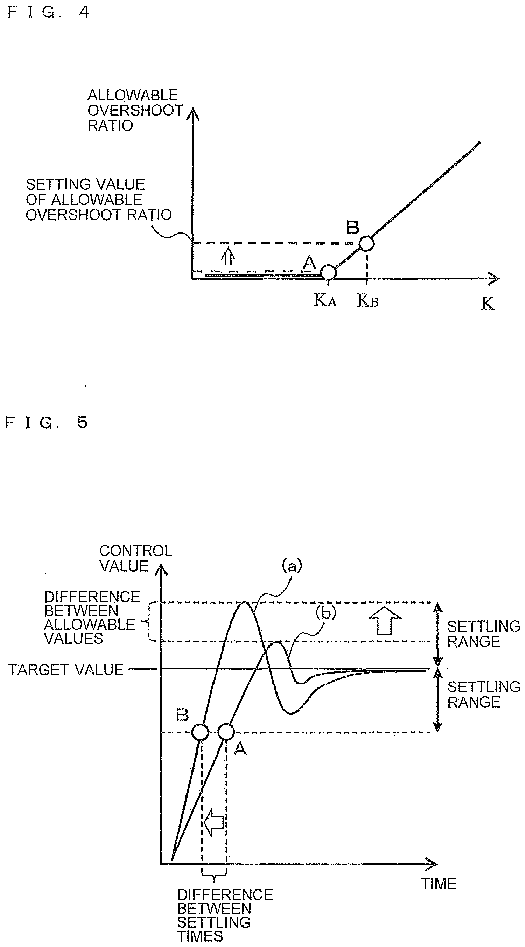

Fig. 4 illustrates the relationship between a control gain K and an allowable overshoot ratio. In Fig. 4, the horizontal axis represents the control gain K, and the vertical axis represents the allowable overshoot ratio. As described above, the allowable overshoot ratio denotes a ratio of an overshoot of a compressor discharge temperature to a target value. Fig. 4 illustrates results obtained by performing simulations of the control gain K and the allowable overshoot ratio by using a control interval, an expansion valve opening degree, and compressor frequency as fixed values.

When the control gain K is small, a compressor discharge temperature changes slowly, and converges to a target value without overshooting the target value, and thus the allowable overshoot ratio is a very small value of less than or equal to 1%. When the control gain K is less than a predetermined value $K_A$, the allowable overshoot ratio remains at the very small value. When the control gain K is not less than the predetermined value $K_A$, the control gain K and the allowable overshoot ratio have a proportional relationship to each other, and the compressor discharge temperature changes suddenly as the control gain K increases, and converges to the target value after overshooting the target value.

Thus, there is a correlation between the control gain K and the allowable overshoot ratio, and when the allowable overshoot ratio is determined, the control gain K can be determined on the basis of a pre-acquired relational expression between the control gain K and the allowable overshoot ratio. This relational expression is a relational expression with a control interval, an expansion valve opening degree, compressor frequency, and an allowable overshoot ratio as variables.

Hence, if the allowable overshoot ratio is a ratio of a point B illustrated in Fig. 4, the relational expression (proportional relational expression) gives that the control gain K is $K_B$. Also, if the allowable overshoot ratio is less than or equal to a ratio of a point A illustrated in Fig. 4, the control gain K is $K_A$.

It is noted that the control gain K for determining a manipulated variable of the operational object at which the control value reaches exactly the upper limit value of the settling range differs according to an operating state. In Embodiment 1, the control gain K is changed in accordance with an operating state, a manipulated variable of the operational object is determined by using the changed control gain K, and thus a response in which the control value reaches exactly the upper limit value of the settling range is obtained, thereby shortening a settling time. In order to enable such control, in Embodiment 1, as described below, an index of a variable allowable overshoot ratio Xa [%] obtained by substituting "settling range $\Delta T$" for "overshoot amount a" of the numerator of the expression of a/|T - Tm| for calculating an allowable overshoot ratio, and an index of a preset reference allowable overshoot ratio Xb [%] to be described are introduced, one of these indexes is selected in accordance with an operating state, and the control gain K is calculated by using the selected allowable overshoot ratio to obtain a manipulated variable. Hereinafter, a selected allowable overshoot ratio of the variable allowable overshoot ratio Xa and the reference allowable overshoot ratio Xb is referred to as a setting allowable overshoot ratio Y.

The variable allowable overshoot ratio Xa is calculated as the following Expression (1).

[Expression 1]

$$\text{variable allowable overshoot ratio Xa [\%]} = |(\text{settling range } \Delta T)/(\text{current value T - target value Tm})| \times 100 \cdots (1)$$

Note that Xa = 0% is given in the case of T = Tm.

The reference allowable overshoot ratio Xb is a preset fixed value, and is an allowable overshoot ratio of a current value of the controlled object to a target value. Although the reference allowable overshoot ratio Xb is set to any value, such as 50% or 30%, in accordance with the use of the air-conditioning apparatus, a value of less than 100% is set. When the reference allowable overshoot ratio Xb is 100%, the control value diverges without converging, and does not reach the target value, and thus the reference allowable overshoot ratio Xb is set to a value of less than 100%.

Next, a difference between the case where the setting allowable overshoot ratio Y is the variable allowable overshoot ratio Xa and the case where the setting allowable overshoot ratio Y is the reference allowable overshoot ratio Xb will be described.

Fig. 5 illustrates a difference in settling time between the case where the setting allowable overshoot ratio Y is the variable allowable overshoot ratio Xa and the case where the setting allowable overshoot ratio Y is a value smaller than the variable allowable overshoot ratio Xa. In Fig. 5, (a) denotes the case where the setting allowable overshoot ratio Y is the variable allowable overshoot ratio Xa, and (b) denotes the case where the setting allowable overshoot ratio Y is a value smaller than the variable allowable overshoot ratio Xa.

As for control of the air-conditioning apparatus, the control is performed at certain control intervals. Hereinafter, a target value in each control interval is referred to as an allowable value. The allowable value differs between the case where the variable allowable overshoot ratio Xa is set as the setting allowable overshoot ratio Y and the case where the reference allowable overshoot ratio Xb is set as the setting allowable overshoot ratio Y. The allowable value is calculated from the following Expression (2) using the setting allowable overshoot ratio Y.

[Expression 2]

$$Ta = Tm - Y(T - Tm) \cdots (2)$$

If the control value (current value) is lower than a lower limit value of the settling range of the target value, and if a relationship of setting allowable overshoot ratio Y = variable allowable overshoot ratio Xa is set, Expression (1) and Expression (2) give the allowable value as follows.

$$\text{allowable value} = Tm - Y(T - Tm)$$

$$= Tm - |\Delta T/(T - Tm)| \times (T - Tm)$$

$$= Tm - (-\Delta T) = Tm + \Delta T = \text{upper limit value of settling}$$

range

That is, if a current compressor discharge temperature is lower than the settling range of the target value, and if the relationship of setting allowable overshoot ratio Y = variable allowable overshoot ratio Xa is set, the allowable value is the upper limit value of the settling range as represented by (a) in Fig. 5. Hence, it is found that the allowable value can be the upper limit value of the settling range as represented by (a) in Fig. 5 by setting the variable allowable overshoot ratio Xa as the setting allowable overshoot ratio Y if the current value is lower than the lower limit value of the settling range.

On the other hand, when the reference allowable overshoot ratio Xb is set as the setting allowable overshoot ratio Y, the relationship between the allowable value and the settling range differs according to what percentage the reference allowable overshoot ratio Xb is set to.

The following description will be made using specific examples. For example, when common conditions are target value Tm = 50 degrees C, current value T = 30 degrees C, and settling range $\Delta T$ = 5 degrees C (fixed value), the case where the reference allowable overshoot ratio Xb is 10% and the case where the reference allowable overshoot ratio Xb is 50% have respective allowable values Ta as follows.

The case of reference allowable overshoot ratio Xb of 10%

allowable value = 50 - 0.1(30 - 50) = 52 degrees C

In this case, the allowable value is lower than an upper limit value of 55 degrees C of the settling range.

The case of reference allowable overshoot ratio Xb of 50%

allowable value = 50 - 0.5(30 - 50) = 60 degrees C

In this case, the allowable value exceeds the upper limit value of the settling range.

The case of variable allowable overshoot ratio Xa, in the same conditions, of

$$Xa = |5/(30 - 50)| \times 100 = 25\%$$

allowable value = 55 degrees C = upper limit value of settling range

In Fig. 5, (a) corresponds to, so to speak, the case of the variable allowable overshoot ratio Xa in the above-described conditions = 25%, (b) in Fig. 5 corresponds to the case of the reference allowable overshoot ratio Xb in the above-described conditions = 10%, and thus the case of the variable allowable overshoot ratio Xa = 25% has a shorter settling time than the other case.

Next, when a current value is lower than the lower limit value of the settling range, for the case where the variable allowable overshoot ratio Xa is set as the setting allowable overshoot ratio Y and the case where the reference allowable overshoot ratio Xb is set as the setting allowable overshoot ratio Y, changes in allowable values in each control interval will be described.

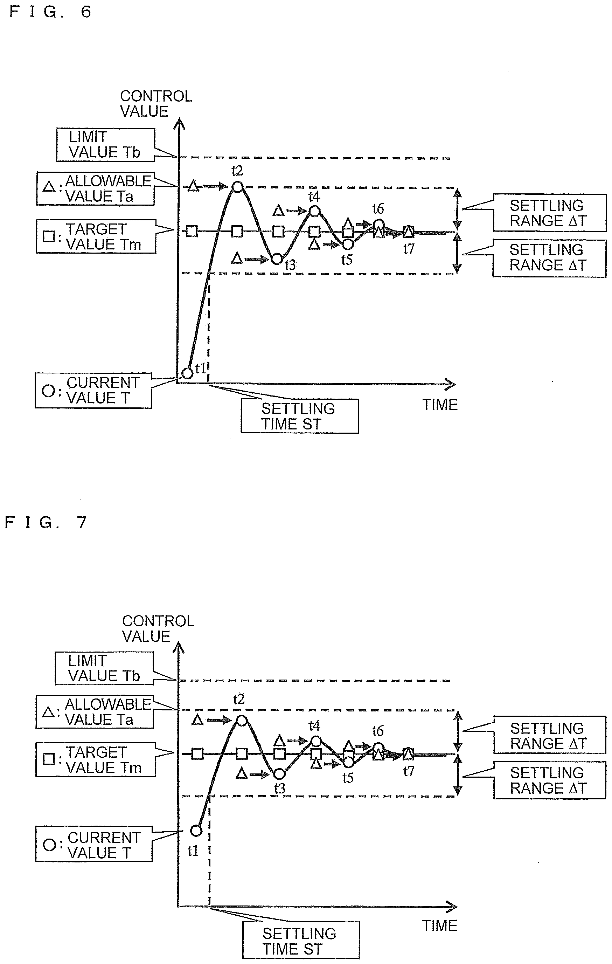

Fig. 6 illustrates changes in the allowable value (target value) Ta in each control interval for the case where the variable allowable overshoot ratio Xa is set as the setting allowable overshoot ratio Y when the current value is lower than the lower limit value of the settling range. In Fig. 6, an interval between plotted points is a control interval.

As illustrated in Fig. 6, when the current value T is present at a time t1, the current value T is lower than the lower limit value of the settling range, the variable allowable overshoot ratio Xa is therefore set as the setting allowable overshoot ratio Y, and thus Expression (2) gives the upper limit value of the settling range as the allowable value Ta. Hence, as a manipulated variable of the operational object calculated on the basis of the variable allowable overshoot ratio Xa, specifically, a manipulated variable for causing the control value to reach the allowable value Ta is determined.

Incidentally, if the relationship of setting allowable overshoot ratio Y = variable allowable overshoot ratio Xa is set, when the current value is lower than the lower limit value of the settling range, or when the current value is within the settling range and smaller than the target value, the allowable value Ta is the upper limit value of the settling range. On the other hand, if the relationship of setting allowable overshoot ratio Y = variable allowable overshoot ratio Xa is set when the current value is within the settling range and higher than the target value, the allowable value is the lower limit value of the settling range. In the case where the variable allowable overshoot ratio Xa is set as the setting allowable overshoot ratio Y in this way, the upper limit value or the lower limit value of the settling range is set as a subsequent allowable value in accordance with a magnitude relationship between the current value and the target value.

Based on this, it will be discussed whether the setting allowable overshoot ratio Y at a time t2 is to be set to the variable allowable overshoot ratio Xa or the reference allowable overshoot ratio Xb. If the variable allowable overshoot ratio Xa is set as the setting allowable overshoot ratio Y because the control value is within the settling range at the time t2, the lower limit value of the settling range is set as a subsequent allowable value Ta because the current value exceeds the target value, and a subsequent manipulated variable is determined so that the compressor discharge temperature reaches the allowable value Ta. That is, when the variable allowable overshoot ratio Xa is set as the setting allowable overshoot ratio Y after t2 after the current value falls within the settling range, control is performed in which the upper limit value and the lower limit value of the settling range are alternately set as the allowable value, and thus the compressor discharge temperature diverges without converging to the target value.

Hence, after the time t2 after the control value falls within the settling range, the reference allowable overshoot ratio Xb is set as the setting allowable overshoot ratio Y. Thus, the allowable value Ta gradually approaches a value close to the target value Tm while passing through the target value Tm and going up and down at control intervals, and also the compressor discharge temperature gradually converges to the target value Tm while passing through the target value Tm and going up and down in the same way.

Fig. 7 illustrates changes in the allowable value (target value) Ta in each control interval for the case where the reference allowable overshoot ratio Xb is set as the setting allowable overshoot ratio Y when the current value is lower than the lower limit value of the settling range. In Fig. 7, plotted points represent control intervals.

When the current value T is present at a time t1, if, for example, the reference allowable overshoot ratio Xb (< variable allowable overshoot ratio Xa) is set as the setting allowable overshoot ratio Y, the allowable value Ta is a value which is higher than the target value and lower than the upper limit value of the settling range. Then, a subsequent manipulated variable is determined so that the control value reaches the allowable value Ta. After t2, changes in the allowable value Ta are similar to those in Fig. 6.

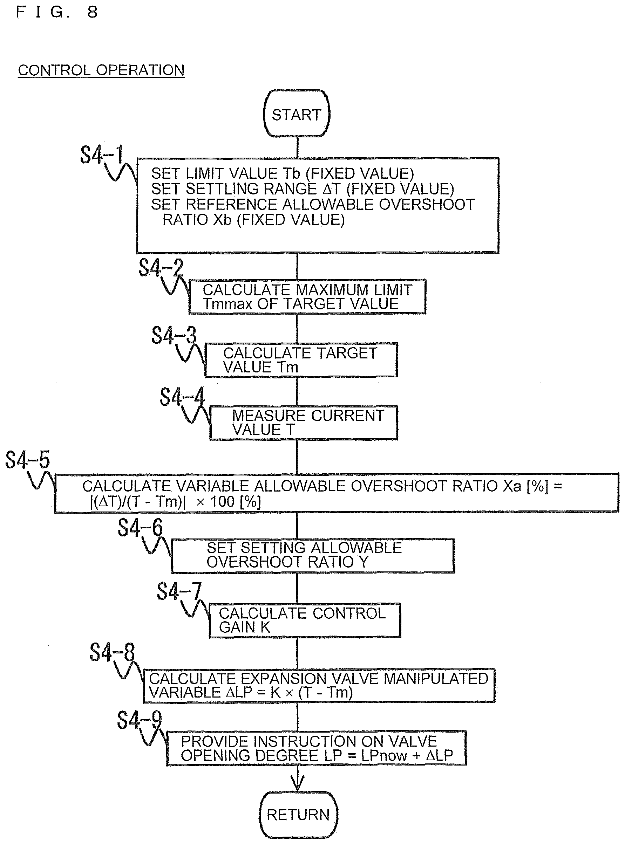

Fig. 8 is a control flowchart for the expansion valve of the air-conditioning apparatus according to Embodiment 1 of the present invention. Fig. 8 corresponds to details about operation of the expansion valve 7 in S4 illustrated in Fig. 2. Here, a description will be given of the case where a current value is lower than the lower limit value of the settling range.

First, in S4-1, the controller 41 reads a preset limit value Tb of the compressor discharge temperature. The limit value Tb is defined as an upper limit value below which protection control for avoiding damage to a device (compressor 3 here) of the controlled object is not entered and the device can continue operating safely. Similarly, the controller 41 also reads the preset settling range $\Delta T$ as an index representing the stability of the current value. Similarly, the controller 41 also reads the preset reference allowable overshoot ratio Xb.

Then, in S4-2, the controller 41 calculates a maximum limit value Tmmax of a target value of the compressor discharge temperature. The maximum limit value Tmmax of the target value is represented by the following Expression (3) using the limit value Tb and the settling range $\Delta T$. For this reason, even if a value calculated as the target value in subsequent S4-3 is equal to the maximum limit value Tmmax, the upper limit value of the settling range in which that target value is centered does not exceed the limit value Tb.

[Expression 3]

$$Tmmax = Tb - \Delta T \cdots (3)$$

Then, in S4-3, the controller 41 calculates the target value Tm of the compressor discharge temperature on the basis of a compressor discharge refrigerant pressure measured by the pressure sensor 31 and a compressor suction refrigerant pressure measured by the pressure sensor 32. When the target value Tm exceeds the maximum limit value Tmmax of the target value Tm, the maximum limit value Tmmax of the target value is set as the target value Tm. In S4-4, the current value (compressor discharge temperature T) is measured by using the temperature sensor 21 in the measurement unit 41a.

Then, in S4-5, the controller 41 calculates the variable allowable overshoot ratio Xa from the above-described Expression (1) using the settling range $\Delta T$, the target value Tm of the compressor discharge temperature, and the current value T of the compressor discharge temperature.

In S4-6, the controller 41 sets the setting allowable overshoot ratio Y. The controller 41 sets the variable allowable overshoot ratio Xa as the setting allowable overshoot ratio Y if the current value is smaller than the lower limit value of the settling range, and sets the reference allowable overshoot ratio Xb as the setting allowable overshoot ratio Y if the current value is not less than the lower limit value of the settling range.

In S4-7, the controller 41 calculates the control gain K on the basis of the setting allowable overshoot ratio Y, values obtained from operating states of a refrigeration cycle, and the pre-acquired relational expression (the relational expression in Fig. 4, that is, a function with a control interval, an expansion valve opening degree, compressor frequency, and an allowable overshoot ratio (setting allowable overshoot ratio Y) as variables).

In S4-8, the controller 41 calculates an expansion valve manipulated variable $\Delta LP$ on the basis of a deviation between the target value Tm and the current value T of the compressor discharge temperature, and the control gain K. In S4-9, the controller 41 calculates an expansion valve opening degree LP by adding the manipulated variable ΔLP calculated in S4-8 to a current expansion valve opening degree LPnow. Then, the controller 41 sets the opening degree of the expansion valve 7 to the calculated expansion valve opening degree LP in the control unit 41b.

Here, since the compressor discharge temperature tends to decrease as an outdoor temperature decreases, a difference between the current value T and the target value Tm increases as the outdoor temperature decreases, and an initial variable allowable overshoot ratio Xa tends to decrease on the basis of the Expression (1). In addition, since the variable allowable overshoot ratio Xa is set as the setting allowable overshoot ratio Y while the current value T is smaller than the lower limit value of the settling range, if the variable allowable overshoot ratio Xa is small, the control gain K having a proportional relationship to the setting allowable overshoot ratio Y is similarly small. Furthermore, while the current value T is smaller than the lower limit value of the settling range, the variable allowable overshoot ratio Xa increases on the basis of the Expression (1) as the current value approaches the lower limit value of the settling range. Hence, while the current value is smaller than the lower limit value of the settling range, the control gain K having a proportional relationship to the setting allowable overshoot ratio Y similarly increases. For this reason, in comparison with the known technique in which a control gain is a fixed value, the manipulated variable ΔLP of the operational object also increases, thereby enabling the current value to reach the target value swiftly.

Furthermore, as described above, since the control gain K is calculated by using the function with a control interval, an expansion valve opening degree, compressor frequency, and the allowable overshoot ratio Y as variables, the control gain K reflecting an operating state variable can be obtained. That is, the expansion valve manipulated variable is not excessively reduced in low-load operation in which a set temperature is close to an indoor temperature, therefore enabling solution of the problem in that it takes time for the controlled object to reach the target value.

That is, the above-described control enables a quick approach to the target value Tm in a range of an allowable overshoot ratio according to a system configuration and an operating state of the air-conditioning apparatus, and also achievement of optimum operation that minimizes the settling time in the range of the allowable overshoot ratio. Thus, a comfortable space is achieved early, and an improvement in energy savings is achieved.

Furthermore, according to the above-described control, the controller 41 determines the expansion valve manipulated variable in accordance with a deviation between the current value and the target value of the compressor discharge temperature, and thus, in comparison with the Patent Literature 1, a sufficient manipulated variable can be provided, and energy-saving operation can be achieved early. The controller 41 also increases the manipulated variable in a range in which the allowable value is not exceeded even if the deviation between the current value and the target value of the compressor discharge temperature is less than or equal to a predetermined value, and thus energy-saving operation can be achieved early in comparison with the Patent Literature 2. The expansion valve 7 is also controlled so that an intended refrigeration cycle is reached swiftly, and thus an improvement in device reliability of the expansion valve 7 due to a reduction in the number of times the expansion valve 7 is operated is achieved.

Furthermore, in Embodiment 1, in changes in the compressor discharge temperature over time, although the case where an initial value of the compressor discharge temperature is lower than the target value Tm and where an upper limit value is set as the limit value has been described, the case where the initial value of the compressor discharge temperature is higher than the target value Tm and where a lower limit value is set as the limit value can be similarly implemented. That is, while the current value is higher than the upper limit value of the settling range, the variable allowable overshoot ratio Xa is calculated by using the lower limit value of the settling range as the target value, the control gain K is calculated on the basis of the variable allowable overshoot ratio Xa, and then the manipulated variable is determined.

Embodiment 2

In Embodiment 1, when the target value Tm calculated in S4-3 in Fig. 8 exceeds the maximum limit value Tmmax of the target value Tm, the target value Tm is regulated to the maximum limit value Tmmax of the target value. This is because a preset fixed value is set as the settling range and the maximum limit value Tmmax is obtained from the Expression (3). Hence, in Embodiment 2, the settling range is reduced when the current value T approaches the target value Tm, and the maximum limit value Tmmax of the target value is thereby increased so that the current value T approaches the original target value swiftly, thus achieving further energy-saving operation.

The structure of an air-conditioning apparatus in Embodiment 2 is the same as that in Embodiment 1 illustrated in Fig. 1. A description will be given with emphasis on differences between Embodiment 2 and Embodiment 1 below.

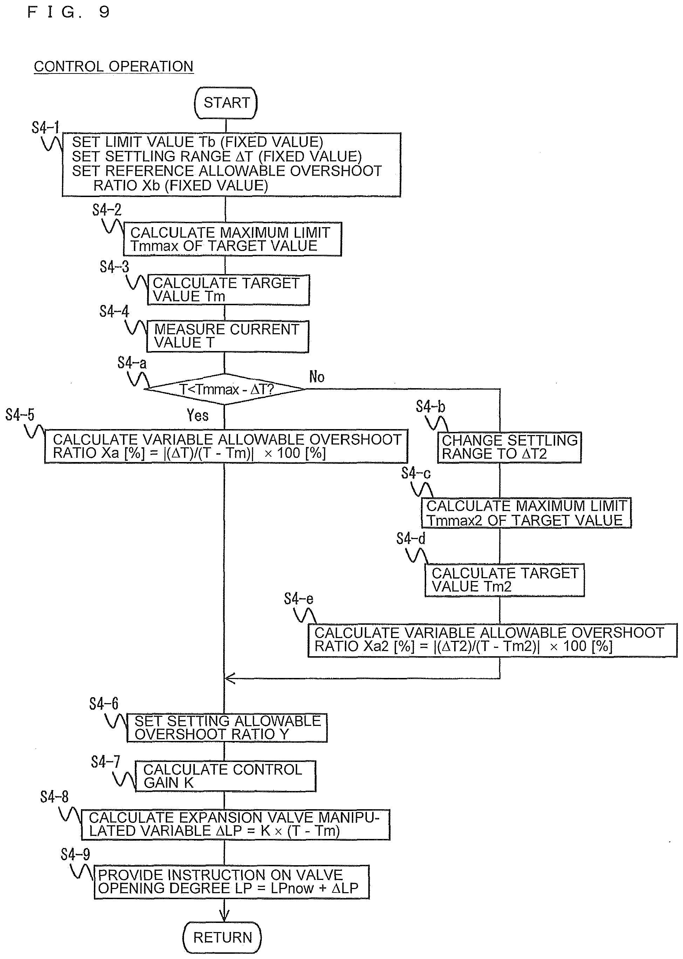

Fig. 9 is a control flowchart for a manipulated variable of the operational object in the air-conditioning apparatus according to Embodiment 2 of the present invention.

In Fig. 9, S4-1 to S4-4 are the same as those in the flowchart of Fig. 8. In S4-a, if the controller 41 determines that the compressor discharge temperature is lower than a value obtained by subtracting the settling range ΔT from the maximum limit value Tmmax of the target value, the controller 41 proceeds to S4-5, and then subsequent steps are the same as those in the flowchart of Fig. 8.

On the other hand, if the controller 41 determines that the compressor discharge temperature is not lower than a value obtained by subtracting the settling range $\Delta T$ from the maximum limit value Tmmax of the target value, the controller 41 proceeds to S4-b, and changes the settling range $\Delta T$ to $\Delta T2$ calculated from Expression (4).

[Expression 4]

$$\Delta T2 = \Delta T \times Xb \ (Xb < 100\%) \cdots (4)$$

In S4-c, the controller 41 calculates a maximum limit value Tmmax2 (= Tb-$\Delta T2$) of a target value. In S4-d, the controller 41 calculates a new target value Tm2 of the compressor discharge temperature on the basis of a compressor discharge refrigerant pressure measured by the pressure sensor 31 and a compressor suction refrigerant pressure measured by the pressure sensor 32. In S4-e, the controller 41 calculates a variable allowable overshoot ratio Xa2 by using the changed settling range $\Delta T2$ and target value Tm2, and the current value T (compressor discharge temperature) measured in S4-4. Subsequently, the controller 41 proceeds to S4-6, and then subsequent steps are the same as those in the flowchart of Fig. 8.

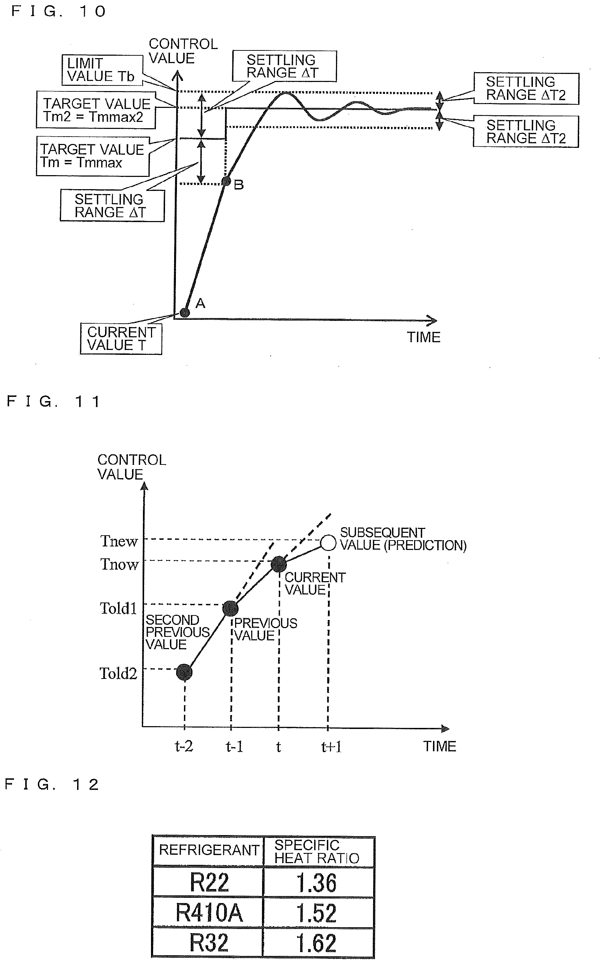

Fig. 10 illustrates changes in control value over time for the case where the settling range $\Delta T$ is changed in midstream in the air-conditioning apparatus according to Embodiment 2 of the present invention. It is noted that Fig. 10 illustrates changes in control value over time for the case where the compressor frequency is relatively high and the target value Tm is equal to the maximum limit value Tmmax of the target value.

If the current value T of the control value (compressor discharge temperature) is a point A, the relationship in S4-a in the flowchart of Fig. 9 is satisfied, and thus the settling range $\Delta T$ is the same as that in S4-1 in the flowchart of Fig. 9. Also, the target value Tm is the same as the maximum limit value Tmmax of the target value obtained by using the settling range $\Delta T$ in S4-1.

If the current value T is a point B (a point within the settling range $\Delta T$), the relationship in S4-a in the flowchart of Fig. 9 is not satisfied, and thus the controller 41 proceeds to S4-b, and changes the settling range $\Delta T$ to $\Delta T2$. When the settling range $\Delta T$ is changed to $\Delta T2$, the settling range is reduced, and thus the maximum limit value Tmmax2 (= Tm2) of a target value is Tb - $\Delta T2$, and is larger than the original maximum limit value Tmmax (= Tm) of the target value. The maximum limit value Tmmax2 of the target value is larger than the original maximum limit value Tmmax of the target value, and thus changes in the current value T over time after the variable allowable point B represent the case where the target value Tm is equal to the changed maximum limit value Tmmax2 of the target value in Fig. 6 and Fig. 7.

The above-described control enables early achievement of energy-saving operation.

It is noted that, in Embodiment 2, although the case where the maximum limit value of the target value of the controlled object is increased when the current value of the controlled object approaches the target value from a lower side with respect to the target value has been described, a minimum limit value of the target value of the controlled object is reduced if the current value of the controlled object approaches the target value from a higher side with respect to the target value.

Furthermore, although, in Embodiments 1 and 2, a compressor discharge temperature has been given as an example for the allowable value Ta, the target value Tm, and the current value T, the same can be done with a degree of subcooling at a condenser, a degree of superheat at an evaporator, a degree of superheat at compressor suction, a degree of superheat at compressor discharge, a high pressure, a low pressure, a compression ratio, or a compressor current value, by providing the controller 41 with a limit value and a settling range $\Delta T$, and this does not depart from the scope of the present invention.

(Modifications)

In Embodiments 1 and 2, in a settling range, a subsequent value predicted by using a past value of the controlled object and a current value of the controlled object may be used in place of the current value of the controlled object. This case can further enhance convergence. As a method of predicting a subsequent value, for example, a case using three-point prediction will be described below.

Fig. 11 illustrates a subsequent value prediction method of predicting a subsequent value from a current value, a previous value, and a second previous value of the controlled object.

The three-point prediction is a method in which three points of a second previous value Told2 and a previous value Told1 of a current value, and a current value Tnow, which are collected at certain control intervals, are used, and when a deviation between the previous value Told1 and the current value Tnow is smaller than a deviation between the second previous value Told2 and the previous value Told1, a subsequent value Tnew is predicted in accordance with a deviation ratio as the following Expression (5).

[Expression 5]

$$Tnew = Tnow + (Tnow - Told1)^2/(Told1 - Told2) \cdots (5)$$

The controller 41 reduces the control gain K if the subsequent value Tnew exceeds an allowable overshoot amount.

(Refrigerant Used)

Fig. 12 is a table illustrating a specific heat ratio of refrigerant used for the refrigeration cycle of the air-conditioning apparatus in each Embodiment of the present invention.

Refrigerant used for the refrigeration cycle of the air-conditioning apparatus is refrigerant, such as R32 refrigerant, which is larger in terms of a specific heat ratio than R22 refrigerant currently used in overseas models as illustrated in Fig. 12, and whose compressor discharge temperature is likely to increase, and there are the following advantages in the refrigerant. In the case where the compressor discharge temperature is a controlled object, these are two advantages that an abnormally excessive increase in the compressor discharge temperature can be prevented by setting an allowable overshoot ratio, and that comfort can be increased by causing the compressor discharge temperature to reach the target value Tm of the compressor discharge temperature swiftly in an operating state in which the compressor discharge temperature does not increase.

Reference Signs List

1 outdoor unit 2 indoor unit 3 compressor 4 four-way valve 5 outdoor heat exchanger 6 outdoor fan 7 expansion valve 8 liquid pipe 9 indoor heat exchanger 10 indoor fan 11 gas pipe 21 temperature sensor 22 temperature sensor 23 temperature sensor 24 temperature sensor 25 temperature sensor 31 pressure sensor 32 pressure sensor 41 controller 41a measurement unit 41b control unit

**Claims**

**1.**   An air-conditioning apparatus comprising:

a compressor (3), a condenser, an expansion valve (7), and an evaporator, included in a refrigerant circuit through which refrigerant circulates;
a condenser fan;
an evaporator fan;
a measurement unit (41a) configured to measure operating state variables of the refrigerant circuit; and
a control unit (41 b) configured to control a manipulated variable of an operational object, which is at least one of frequency of the compressor (3), an opening degree of the expansion valve (7), a rotation speed of the condenser fan, and a rotation speed of the evaporator fan, so that a current value of a controlled object, which is one measurement of measurements obtained by the measurement unit (41a), reaches a target value of the controlled object determined based on measurements other than the one measurement,
**characterized in that** the control unit (41b)
determines, while the current value is lower than a lower limit value among an upper limit value and the lower limit value of a settling range in which the target value is centered, the manipulated variable by using the upper limit value as a target value,
determines, while the current value is higher than the upper limit value, the manipulated variable by using the lower limit value as a target value, and
determines, after the current value falls within the settling range, the manipulated variable based on a reference allowable overshoot ratio, which is a preset overshoot ratio and is an allowable overshoot ratio of the current value of the controlled object to the target value,
wherein the control unit (41b)
calculates, when determining the manipulated variable while the current value is outside the settling range, a variable allowable overshoot ratio by dividing the settling range by a difference between the current value and the target value, calculates a control gain for determining the manipulated variable based on the variable allowable overshoot ratio, and determines the manipulated variable based on the control gain, and

calculates, when determining the manipulated variable after the current value falls within the settling range, a control gain for determining the manipulated variable based on the reference allowable overshoot ratio, and determines the manipulated variable based on the control gain.

2. The air-conditioning apparatus of claim 1 ,
wherein the control unit (41 b),
when the current value of the controlled object approaches the target value, increases a maximum limit value of the target value of the controlled object above a present level, or reduces a minimum limit value of the target value of the controlled object below a present level.

3. The air-conditioning apparatus of claim 1 or claim 2,
wherein the control unit (41 b)
predicts a subsequent value by using a past value of the controlled object and the current value at control intervals, and reduces the control gain if the subsequent value exceeds an allowable overshoot amount.

4. The air-conditioning apparatus of claim 1 or claim 3,
wherein the control unit (41 b) further uses a control interval, an expansion valve opening degree, and compressor frequency when calculating the control gain.

**Patentansprüche**

1. Klimaanlage, umfassend:

einen Verdichter (3), einen Kondensator, ein Expansionsventil (7) und einen Verdampfer, die in einem Kältemittelkreislauf, durch den Kältemittel zirkuliert, enthalten sind;
einen Kondensatorlüfter;
einen Verdampferlüfter;
eine Messeinheit (41a), die eingerichtet ist, Betriebszustandsvariablen des Kältemittelkreislaufs zu messen; und
eine Steuereinheit (41b), die eingerichtet ist, eine Stellgröße eines Betriebsobjekts zu steuern, die zumindest eines von Frequenz des Verdichters (3), einem Öffnungsgrad des Expansionsventils (7), einer Drehzahl des Kondensatorlüfters und einer Drehzahl des Verdampferlüfters ist, so dass ein aktueller Wert eines gesteuerten Objekts, der eine Messung von Messungen ist, die von der Messeinheit (41a) erhalten werden, einen Zielwert des gesteuerten Objekts erreicht, der auf Grundlage von anderen Messungen als der einen Messung bestimmt wird,
**dadurch gekennzeichnet, dass** die Steuereinheit (41b)
die Stellgröße bestimmt, während der aktuelle Wert niedriger ist als ein unterer Grenzwert aus einem oberen Grenzwert und dem unteren Grenzwert eines Einschwingbereichs, in dem der Zielwert zentriert ist, indem der obere Grenzwert als Zielwert verwendet wird,
die Stellgröße bestimmt, während der aktuelle Wert höher ist als der obere Grenzwert, indem der untere Grenzwert als Zielwert verwendet wird, und
die Stellgröße bestimmt, nachdem der aktuelle Wert in den Einschwingbereich gefallen ist, auf Grundlage eines zulässigen Referenzüberschwingverhältnisses, das ein voreingestelltes Überschwingverhältnis ist und ein zulässiges Überschwingverhältnis des aktuellen Wertes des gesteuerten Objekts zum Zielwert ist,
wobei die Steuereinheit (41b)
beim Bestimmen der Stellgröße, während der aktuelle Wert außerhalb des Einschwingbereichs liegt, ein variables zulässiges Überschwingverhältnis berechnet, indem der Einschwingbereich durch eine Differenz zwischen dem aktuellen Wert und dem Zielwert dividiert wird, eine Steuerverstärkung zum Bestimmen der Stellgröße auf Grundlage des variablen zulässigen Überschwingverhältnisses berechnet und die Stellgröße auf Grundlage der Steuerverstärkung bestimmt, und
beim Bestimmen der Stellgröße, nachdem der aktuelle Wert in den Einschwingbereich gefallen ist, eine Steuerverstärkung zum Bestimmen der Stellgröße auf Grundlage des zulässigen Referenzüberschwingverhältnisses berechnet, und die Stellgröße auf Grundlage der Steuerverstärkung bestimmt.

2. Klimaanlage nach Anspruch 1,

wobei die Steuereinheit (41b),
wenn der aktuelle Wert des gesteuerten Objekts sich dem Zielwert nähert, einen Maximalgrenzwert des Zielwerts

4

**EP 3 006 847 B1**

des gesteuerten Objekts über ein gegenwärtiges Niveau erhöht, oder einen Minimalgrenzwert des Zielwerts des gesteuerten Objekts unter ein gegenwärtiges Niveau reduziert.

**3.** Klimaanlage nach Anspruch 1 oder Anspruch 2,

wobei die Steuereinheit (41b)
einen nachfolgenden Wert unter Verwendung eines vergangenen Wertes des gesteuerten Objekts und des aktuellen Wertes in Steuerintervallen prognostiziert und die Steuerverstärkung reduziert, falls der nachfolgende Wert einen zulässigen Überschwingbetrag überschreitet.

**4.** Klimaanlage nach Anspruch 1 oder Anspruch 3,
wobei die Steuereinheit (41b) ferner ein Steuerintervall, einen Expansionsventil-Öffnungsgrad und Verdichterfrequenz beim Berechnen der Steuerverstärkung verwendet.

**Revendications**

**1.** Appareil de climatisation comprenant :

un compresseur (3), un condenseur, une soupape d'expansion (7), et un évaporateur, inclus dans un circuit de fluide frigorigène à travers lequel circule un fluide frigorigène ;
un ventilateur de condenseur ;
un ventilateur d'évaporateur ;
une unité de mesure (41a) configurée pour mesurer des variables d'état de fonctionnement du circuit de fluide frigorigène ; et
une unité de commande (41b) configurée pour commander une variable manipulée d'un objet opérationnel, qui est au moins l'un parmi la fréquence du compresseur (3), le degré d'ouverture de la soupape d'expansion (7), la vitesse de rotation du ventilateur de condenseur, et de la vitesse de rotation du ventilateur d'évaporateur, de telle sorte que la valeur actuelle d'un objet commandé, qui est une mesure parmi les mesures obtenues par l'unité de mesure (41a), atteigne une valeur cible de l'objet commandé déterminée sur la base de mesures autres que la mesure,
**caractérisé en ce que** l'unité de commande (41b)
détermine, si la valeur courante est inférieure à une valeur limite inférieure parmi une valeur limite supérieure et la valeur limite inférieure d'une plage de réglage dans laquelle est centrée la valeur cible, la variable manipulée en utilisant la valeur limite supérieure en tant que valeur cible,
détermine, si la valeur actuelle est supérieure à la valeur limite supérieure, la variable manipulée en utilisant la valeur limite inférieure en tant que valeur cible, et
détermine, une fois que la valeur actuelle est rentrée dans la plage de réglage, la variable manipulée sur la base d'un taux de dépassement permis de référence, qui est un taux de dépassement préréglé et qui est un taux de dépassement permis de la valeur actuelle de l'objet commandé par rapport à la valeur cible,
dans lequel l'unité de commande (41b)
calcule, lors de la détermination de la variable manipulée, si la valeur actuelle se situe en dehors de la plage de réglage, un taux de dépassement permis variable en divisant la plage de réglage par la différence entre la valeur actuelle et la valeur cible, calcule un gain de commande destiné à déterminer la variable manipulée sur la base du taux de dépassement permis variable, et détermine la variable manipulée sur la base du gain de commande, et
calcule, lors de la détermination de la variable manipulée, une fois que la valeur actuelle est rentrée dans la plage de réglage, un gain de commande destiné à déterminer la variable manipulée sur la base du taux de dépassement permis de référence, et détermine la variable manipulée sur la base du gain de commande.

**2.** Appareil de climatisation selon la revendication 1,

dans lequel l'unité de commande (41b),
lorsque la valeur actuelle de l'objet commandé approche la valeur cible, augmente une valeur limite maximum de la valeur cible de l'objet commandé au-dessus d'un niveau actuel, ou réduit une valeur limite minimum de la valeur cible de l'objet commandé au-dessous d'un niveau actuel.

**3.** Appareil de climatisation selon la revendication 1 ou 2,

13

dans lequel l'unité de commande (41b)
prédit une valeur ultérieure en utilisant une valeur passée de l'objet commandé et la valeur actuelle selon des intervalles de commande, et réduit le gain de commande si la valeur ultérieure dépasse une quantité de dépassement permise.

4.  Appareil de climatisation selon la revendication 1 ou 3,
dans lequel l'unité de commande (41b) utilise en outre un intervalle de commande, un degré d'ouverture de la soupape d'expansion et la fréquence du compresseur, lors du calcul du gain de commande.

FIG. 1

FIG. 2

CONTROL OPERATION

REMOTE CONTROL
IS TURNED ON

S1
INDOOR TEMPERATURE AND
AIR VOLUME ARE SET

S2
SET EXPANSION VALVE AT CERTAIN OPENING DEGREE, AND ACTIVATE
COMPRESSOR, INDOOR FAN, AND OUTDOOR FAN

S3
DETERMINE COMPRESSOR FREQUENCY IN ACCORDANCE WITH
DEVIATION BETWEEN INDOOR SET TEMPERATURE AND CURRENT
TEMPERATURE

S4
CALCULATE TARGET VALUE OF COMPRESSOR DISCHARGE
TEMPERATURE, AND DETERMINE EXPANSION VALVE OPENING
DEGREE IN ACCORDANCE WITH DEVIATION BETWEEN
CURRENT VALUE AND TARGET VALUE

F I G. 3

CONTROL
VALUE

(3)

C

(2)

(1)

SETTLING
RANGE ΔT

a

TARGET
VALUE Tm

SETTLING
RANGE ΔT

B

A

|T-Tm|

T

TIME

SETTLING TIMES IN RESPE-
CTIVE CONDITIONS

FIG. 4

ALLOWABLE
OVERSHOOT
RATIO

SETTING VALUE
OF ALLOWABLE
OVERSHOOT RATIO

B

A

$K_A$  $K_B$

K

FIG. 5

CONTROL
VALUE

(a)

DIFFERENCE
BETWEEN
ALLOWABLE
VALUES

(b)

SETTLING
RANGE

TARGET VALUE

SETTLING
RANGE

B

A

TIME

DIFFERENCE
BETWEEN
SETTLING
TIMES

17

FIG. 6

FIG. 7

FIG. 8

CONTROL OPERATION

START

S4-1
SET LIMIT VALUE Tb (FIXED VALUE)
SET SETTLING RANGE ΔT (FIXED VALUE)
SET REFERENCE ALLOWABLE OVERSHOOT
RATIO Xb (FIXED VALUE)

S4-2
CALCULATE MAXIMUM LIMIT
Tmmax OF TARGET VALUE

S4-3
CALCULATE TARGET
VALUE Tm

S4-4
MEASURE CURRENT
VALUE T

S4-5
CALCULATE VARIABLE ALLOWABLE OVERSHOOT RATIO Xa [%] =
$|(\Delta T)/(T - Tm)| \times 100$ [%]

S4-6
SET SETTING ALLOWABLE
OVERSHOOT RATIO Y

S4-7
CALCULATE CONTROL
GAIN K

S4-8
CALCULATE EXPANSION VALVE MANIPULATED
VARIABLE ΔLP = K × (T - Tm)

S4-9
PROVIDE INSTRUCTION ON VALVE
OPENING DEGREE LP = LPnow + ΔLP

RETURN

FIG. 9

CONTROL OPERATION

START

S4-1 — SET LIMIT VALUE Tb (FIXED VALUE)
SET SETTLING RANGE ΔT (FIXED VALUE)
SET REFERENCE ALLOWABLE OVERSHOOT
RATIO Xb (FIXED VALUE)

S4-2 — CALCULATE MAXIMUM LIMIT
Tmmax OF TARGET VALUE

S4-3 — CALCULATE TARGET
VALUE Tm

S4-4 — MEASURE CURRENT
VALUE T

S4-a — T<Tmmax - ΔT?

Yes

No

S4-b — CHANGE SETTLING
RANGE TO ΔT2

S4-5 — CALCULATE VARIABLE ALLOWABLE OVERSHOOT
RATIO Xa [%] = |(ΔT)/(T - Tm)| × 100 [%]

S4-c — CALCULATE MAXIMUM LIMIT
Tmmax2 OF TARGET VALUE

S4-d — CALCULATE TARGET
VALUE Tm2

S4-e — CALCULATE VARIABLE ALLOWABLE OVERSHOOT
RATIO Xa2 [%] = |(ΔT2)/(T - Tm2)| × 100 [%]

S4-6 — SET SETTING ALLOWABLE
OVERSHOOT RATIO Y

S4-7 — CALCULATE CONTROL
GAIN K

S4-8 — CALCULATE EXPANSION VALVE MANIPU-
LATED VARIABLE ΔLP = K × (T - Tm)

S4-9 — PROVIDE INSTRUCTION ON VALVE
OPENING DEGREE LP = LPnow + ΔLP

RETURN

20

FIG. 10

FIG. 11

FIG. 12

| REFRIGERANT | SPECIFIC HEAT RATIO |
|---|---|
| R22 | 1.36 |
| R410A | 1.52 |
| R32 | 1.62 |

**EP 3 006 847 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2261580 A1
- DE 3739980 A1
- WO 2008087916 A1
- EP 2175213 A1
- EP 1585924 A2
- JP H1030852 A
- JP 2001012808 A
- JP 2009008346 A